# EUROPEAN PATENT APPLICATION

(11) **EP 2 113 633 A2**
(43) Date of publication of application: **04.11.2009**
(21) Application number: 09250704.5
(22) Date of filing: 12.03.2009
(51) Int. Cl.: F01D 5/00, F01D 11/08

(54) **Method to weld repair blade outer air seals**

(30) Priority: 30.04.2008 US 112253
(71) Applicant: United Technologies Corporation, Hartford, CT 06101 (US)
(72) Inventor: Rose, William M., West Brookfield Massachusetts 01585 (US); Belanger, Philip R., Action Maine 04001 (US); Smith, Darren M., Andover Connecticut 06232 (US)
(74) Representative: Leckey, David Herbert

(57) **Abstract**

A method of repairing a blade outer air seal for a gas turbine engine includes the step (66) of utilizing laser powder fusion materials to supply a metal powder filler into cracks in the blade outer air seal to repair the blade outer air seal for future service. Finally, a weld pass (68) without deposition of powder metal is performed.

## Description

### BACKGROUND OF THE INVENTION

This application relates to a method of repairing a cracked blade outer air seal for a gas turbine engine.

Gas turbine engines are known, and include a plurality of sections. Generally, a compressor section receives air, compresses the air and delivers that air into a combustion section. In the combustion section the compressed air is mixed with fuel and combusted. The products of this combustion pass downstream over a turbine section that generally includes a plurality of rotors each having removable blades. During engine operation, the blades are subjected to the product of combustion and are designed to efficiently utilize the energy in the products of combustion to rotate the turbine rotors. The turbine section also includes a stationary blade outer air seal ("BOAS") that sits radially outwardly of the rotating turbine blades to form a tight seal between the outer periphery of the blade and the inner periphery of the blade outer air seal. In this manner, the products of combustion are guided over the turbine blades, rather than avoiding the turbine blades.

Because blades outer air seals are subject to high temperatures from the products of combustion, they are provided with intricate structures, such as cooling air passages. However, the blades outer air seals are still subjected to stresses and can crack. These blade outer air seals generally have not been repaired. Instead, damaged blade outer air seals have been replaced with undamaged blade outer air seals. This is somewhat undesirable, as undamaged blade outer air seals are often relatively expensive due to their complex structure.

It is known to repair gas turbine engine components, such as turbine blades and blade outer air seals, by utilizing laser powder fusion techniques. In these techniques, laser powder fusion machines deliver liquefied powder metal at locations in need of repair, such as cracked locations

### SUMMARY OF THE INVENTION

In a method according to the present invention, a blade outer air seal is repaired, with a weld repair being utilized on a crack, wherein the weld repair includes laser powder fusion techniques, and wherein a clean weld pass is then made on the crack without any additional deposition of powder metal.

These and other features of the present invention can be best understood from the following specification and drawings, the following of which is a brief description.

### BRIEF DESCRIPTION OF THE DRAWINGS

Figure 1A shows a blade outer air seal with a first repair step occurring.
Figure 1B shows a subsequent step.
Figure 1C shows a location for a blade outer air seal.
Figure 2 is a flowchart of an example method of weld repairing blade outer air seals.

### DETAILED DESCRIPTION OF THE PREFERRED EMBODIMENT

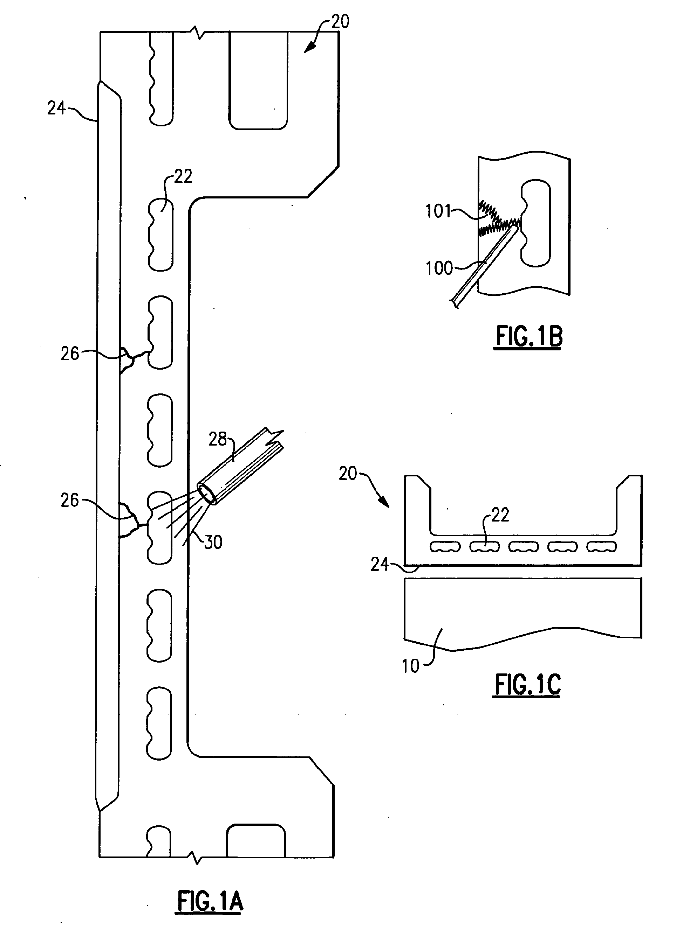

Figure 1A shows a plurality of cooling air channels 22 formed through a blade outer air seal 20. As shown in Figure 1C, an inner peripheral surface 24 will face the outer surface of a turbine blade 10 when the blade outer air seal is mounted within a gas turbine engine. Cooling air is circulated through the channels 22. During engine operation, the blade outer air seal 20 is subjected to high temperature gases, and thus is exposed to thermal stresses. Cracks, such as shown in 26, may form within the blade outer air seal 20.

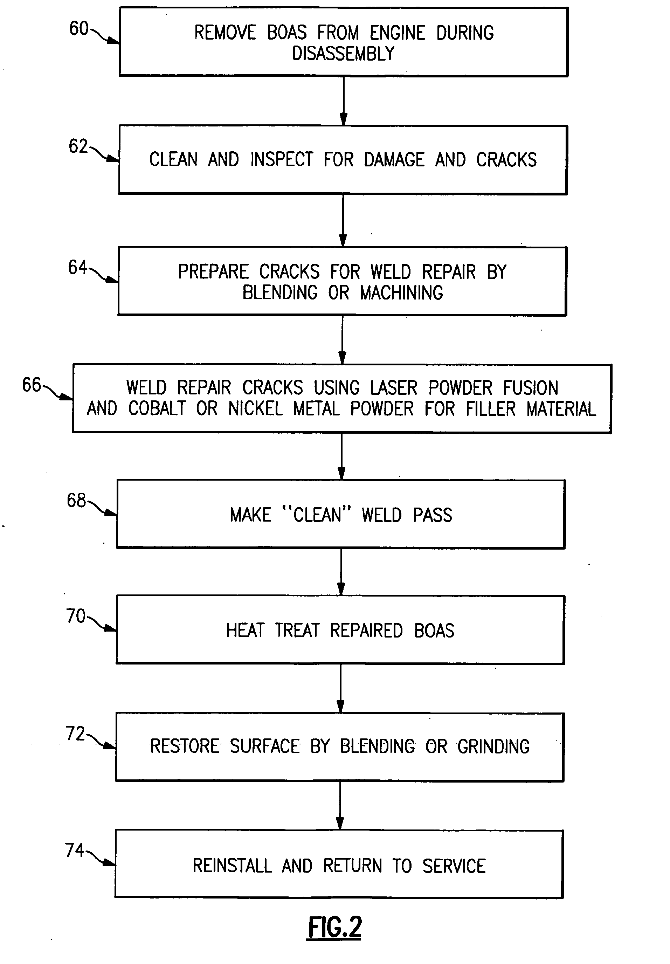

Figure 2 is a flowchart of an example method of weld repairing blade outer air seal 20. In step 60, blade outer air seal 20 is initially removed from the engine. Next, in step 62, blade outer air seal 20 is cleaned and inspected for damage and cracks. In step 64, cracks 26 are prepared for weld repair by blending or machining. In one embodiment, a trench is ground to remove the crack, and prepare an area for receiving the weld material. In step 66, weld repair, such as shown schematically with tool 28 (Figure 1A), is then performed on the cracks 26. As shown schematically, laser powder fusion weld material 30, such as cobalt or nickel metal powders fill the cracks. Computer vision systems can be used to facilitate properly depositing of the weld material 30.

As shown in Figure 1B, once the initial weld material is deposited in the Figure 1A step, a subsequent "clean" pass step 68 of a weld element 100 is made on the repaired crack 101. This "clean" pass of the weld tool will result in a smoother surface at the repaired area.

The repaired blade outer air seal may then be heat treated in step 70. A restored surface may be returned back toward a desired final shape by blending or grinding in step 72 and the blade outer air seal may then be reinstalled in step 74 for return to service.

With the example embodiment, blade outer air seals are easily and reliably repaired such that they will have a longer useful life than in the prior art.

Although embodiments have been disclosed, a worker of ordinary skill in this art would recognize that certain modification would come within the scope of this invention. For that reason, the following claims should be studied to determine the true scope and content of this invention.

## Claims

1. A method of repairing a blade outer air seal (20) for a gas turbine engine comprising the steps of:
1) locating a crack (26) on the blade outer air seal (20);
2) utilizing laser powder fusion weld repair to provide a metal powder filler material for said crack (26); and
3) performing a final weld pass across the crack (26) without depositing any metal powder filler material.

2. The method as set forth in Claim 1, wherein a heat treatment is provided to the blade outer air seal (20) after the laser powder fusion weld repair.

3. The method as set forth in Claim 1 or 2, wherein the crack (26) is restored by at least one of a blending and grinding technique after step 3).

4. The method as set forth in any preceding Claim, wherein a blade outer air seal (20) is initially cleaned and inspected for damage and cracks (26) prior to the step 3).

5. The method as set forth in any preceding Claim, wherein the crack (26) is prepared for weld repair by at least one of blending and machining to remove the crack (26) prior to application of the weld repair.
